# EUROPEAN PATENT APPLICATION

(11) **EP 2 265 018 A1**
(43) Date of publication of application: **22.12.2010**
(21) Application number: 09732371.1
(22) Date of filing: 16.04.2009
(51) Int. Cl.: H04N 7/173, H04N 5/76, H04N 5/765

(54) **RECORDING AND REPRODUCING DEVICE, OPERATION METHOD AND OPERATION PROGRAM OF THE DEVICE, AND VIDEO DISTRIBUTION SYSTEM**

(30) Priority: 17.04.2008 JP 2008107870
(71) Applicant: NEC Corporation, Minato-ku Tokyo 108-8001 (JP)
(72) Inventor: MIZUNO, Daisuke, Tokyo 108-0014 (JP); OZAWA, Kazunori, Tokyo 108-0014 (JP)
(74) Representative: Glawe, Delfs, Moll
(86) International application number: PCT/JP2009/057636
(87) International publication number: WO 2009/128492

(57) **Abstract**

A recording and reproducing apparatus is installed on a network through which communication with a terminal device is enabled. The recording and reproducing apparatus includes: a recording reservation section that receives a recording reservation request for video data from the terminal device via the network; a communication section that receives the video data which is distributed to the terminal device by using at least one of multicast, broadcast, and unicast; a video recording section that records the received video data based on the recording reservation request; and a video distribution section that distributes the recorded video data to a terminal device that has made a reproduction request for the relevant video data via the network.

## Description

### {Technical Field}

The present invention relates to a video distribution system that distributes a video to a terminal device such as a mobile phone by using multicast, broadcast, or unicast and, more particularly, to a recording and reproducing apparatus that records a distributed video and distributes the recorded video data to a terminal device, its operating method and operating program, and a video distribution system.

### {Background Art}

There exists a system where users can enjoy terrestrial digital broadcasting or "one-segment broadcasting" on their terminal devices such as mobile phones (mobile terminals). In this connection, there is known a system where a user once records a one-segment broadcasting program, which is also broadcasted for a common TV, in a server at home or server on the Internet, and afterward, he or she can enjoy the program on his or her mobile phone (refer to PTL 1).

Meanwhile, an MBMS (Multimedia broadcast/Multicast Service) that distributes content such as a video to a mobile phone by using IP (Internet protocol) multicast or IP broadcast is standardized by 3GPP (Third Generation Partnership Project) (refer to NPL 1). The IP multicast or IP broadcast is a technique for realizing one-to-many communication, and the MBMS allows realization of one-to-many video distribution for a mobile phone based on IP in a similar manner to TV broadcasting.

### {Citation List}

### {Patent Literature}

{PTL1} JP-A-2005-303711

### {Non-Patent Literature}

{NPL 1} 3GPP TS23.246 V.8.1.0 (2007-12) 3rd Generation partnership project; Technical Specification Group Service and System Aspects; Multimedia Broadcast/Multicast Service (MBMS); Architecture and functional description (Release 8)

### {Summary of Invention}

### {Technical Problem}

In the case of TV broadcasting for home users, a user can record a video using a VHS (Video Home System) or a hard disk in order to enjoy the recorded video when he or she has time. However, in IP multicast or IP broadcast video distribution for mobile phones, it is difficult to record video content in a mobile phone for the following reasons.

First, a mobile phone is not generally provided with a hard disk and often provided with a flash memory as a recording device. Generally, the capacity of a flash memory is smaller than that of a hard disk, so that it may be often the case that the amount of space required to record video data cannot be obtained. Second, when a mobile user moves to a location where the radio environment is not good during broadcast of a program, it is likely that his or her mobile phone cannot receive a video.

With respect to the above point, the MBMS has a function (FEC (Forward Error Correction) function) of restoring original data even if the radio environment is bad and some errors occur. However, at an underground place or the like where a radio wave cannot reach, the mobile phone cannot receive a video.

Third, since the mobile phone is driven by a battery, there is a possibility that the battery runs down during recording.

As described above, in multicast, broadcast, or unicast video distribution for mobile phones, recording of video content in the mobile phone is difficult in terms of the storage capacity of a storage device used, radio wave environment, or performance of a battery used.

As described above, PTL 1 discloses a system where a user once records a one-segment broadcasting program, which is also broadcasted for a common TV, in a server at home or server on the Internet, and afterward, he or she can enjoy the program on his or her mobile phone. However, it can be considered that, in the MBMS that distributes content by using IP multicast or IP broadcast, contents specialized for a mobile phone network are handled. In this case, it is impossible to record the content in a server at home or server on the Internet, unlike the system disclosed in PTL 1.

The above situations occur not only in the mobile phones but also in other terminal devices such as a portable communication devices having a communication function typified by a PDA (Personal Digital Assistant).

An object of the present invention is to solve the above problem that recording of content cannot successfully be made in the mobile phone and to provide a recording and reproducing apparatus capable of recording video data distributed by using IP multicast, IP broadcast, or IP unicast video distribution for terminal devices such as a mobile phone without worrying about the storage capacity of the terminal device, radio wave environment, or remaining battery level and allowing a user to view the recorded video data in a time-shift manner, its operating method and operating program, and a video distribution system.

### {Solution to Problem}

To achieve the above object, according to a first aspect of the present invention, there is provided a recording and reproducing apparatus installed on a network through which communication with a terminal device is enabled, including: a recording reservation section that receives a recording reservation request for video data from the terminal device via the network; a communication section that receives the video data which is distributed to the terminal device by using at least one of multicast, broadcast, and unicast; a video recording section that records the received video data based on the recording reservation request; and a video distribution section that distributes the recorded video data to a terminal device that has made a reproduction request for the relevant video data via the network.

Further, according to a second aspect of the present invention, there is provided an operating method of a recording and reproducing apparatus installed on a network through which communication with a terminal device is enabled, comprising: receiving a recording reservation request for video data from the terminal device via the network; receiving the video data which is distributed to the terminal device by using at least one of multicast, broadcast, and unicast from the network; recording the received video data based on the recording reservation request; and distributing the recorded video data to a terminal device that has made a reproduction request for the relevant video data via the network.

Further, according to a third aspect of the present invention, there is provided an operating program of a recording and reproducing apparatus installed on a network through which communication with a terminal device is enabled, allowing a computer to execute the steps of: receiving a recording reservation request for video data from the terminal device via the network; receiving the video data which is distributed to the terminal device by using at least one of multicast, broadcast, and unicast from the network; recording the received video data based on the recording reservation request; and distributing the recorded video data to a terminal device that has made a reproduction request for the relevant video data via the network.

Further, according to a fourth aspect of the present invention, there is provided a video distribution system including: the recording and reproducing apparatus and a distribution apparatus that distributes the video data to the terminal device via the network.

### {Advantages Effects of Invention}

According to the present invention, it is possible to record IP multicast, IP broadcast, or IP unicast video data distributed for a terminal device such as a mobile phone without worrying about the storage capacity of the terminal device, radio wave environment, or remaining battery level and allow a user to view the recorded video data in a time-shift manner.

### {Brief Description of Drawings}

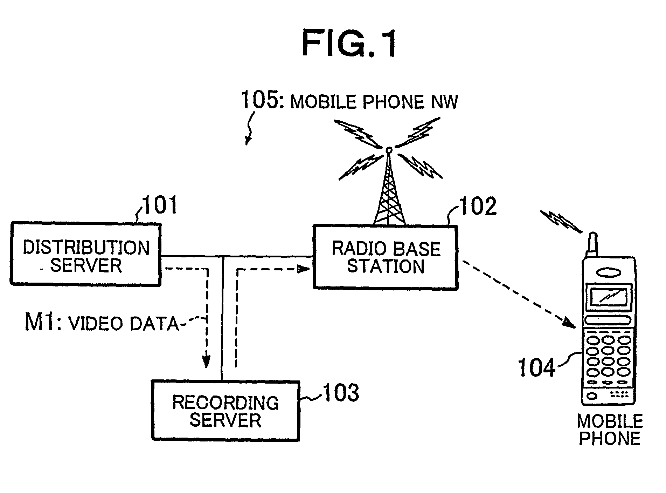

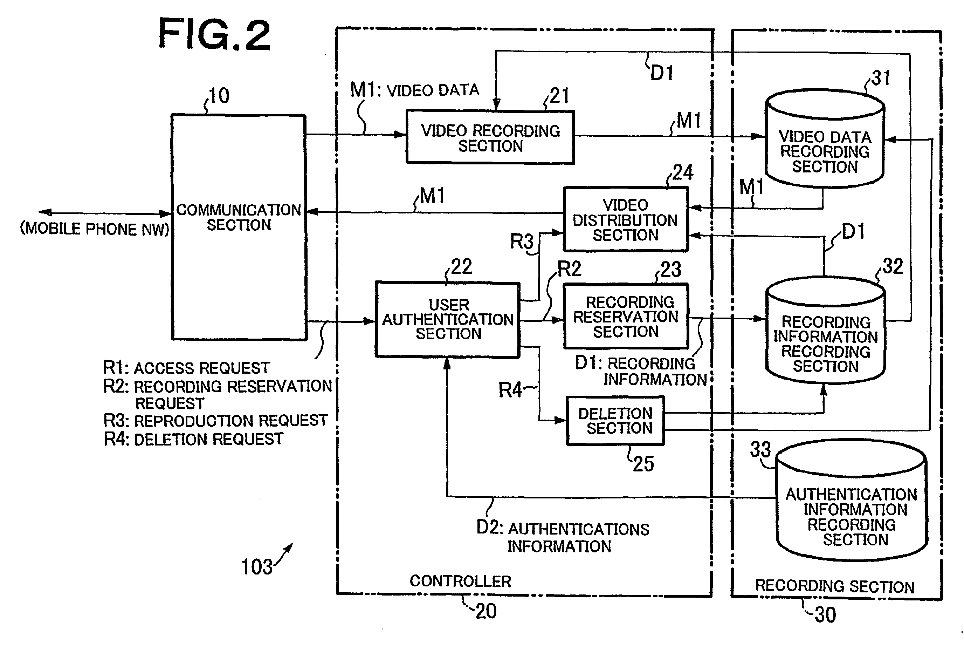

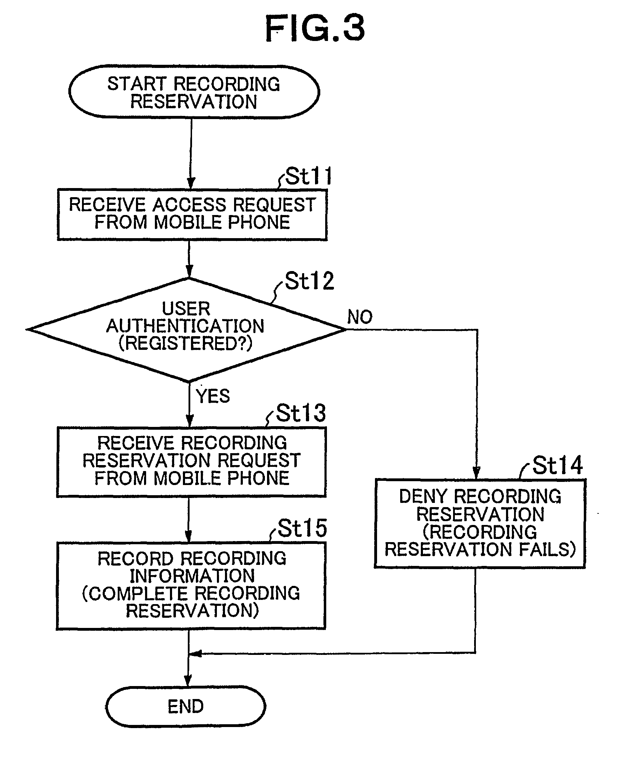

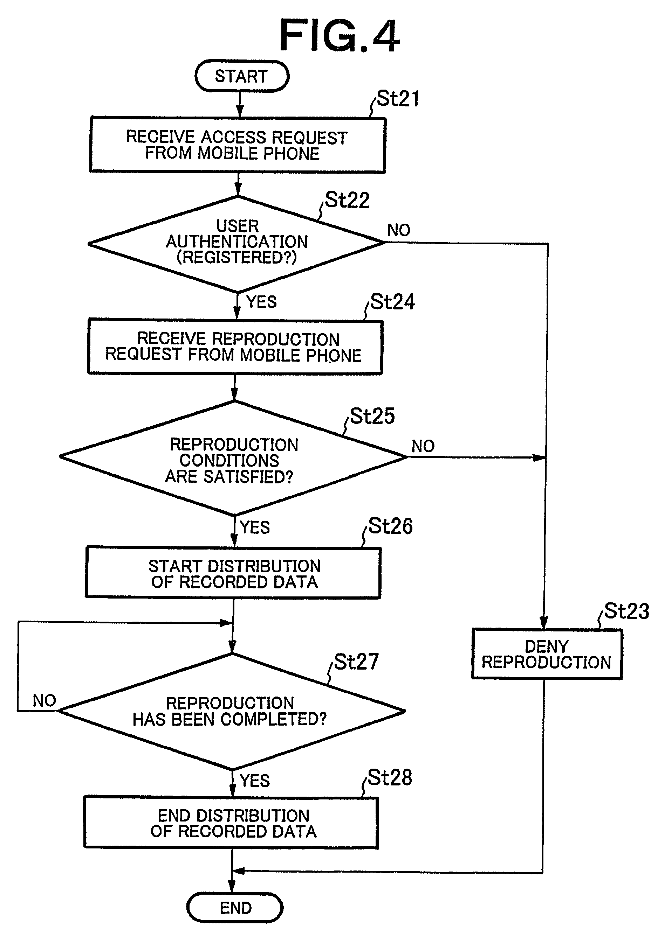

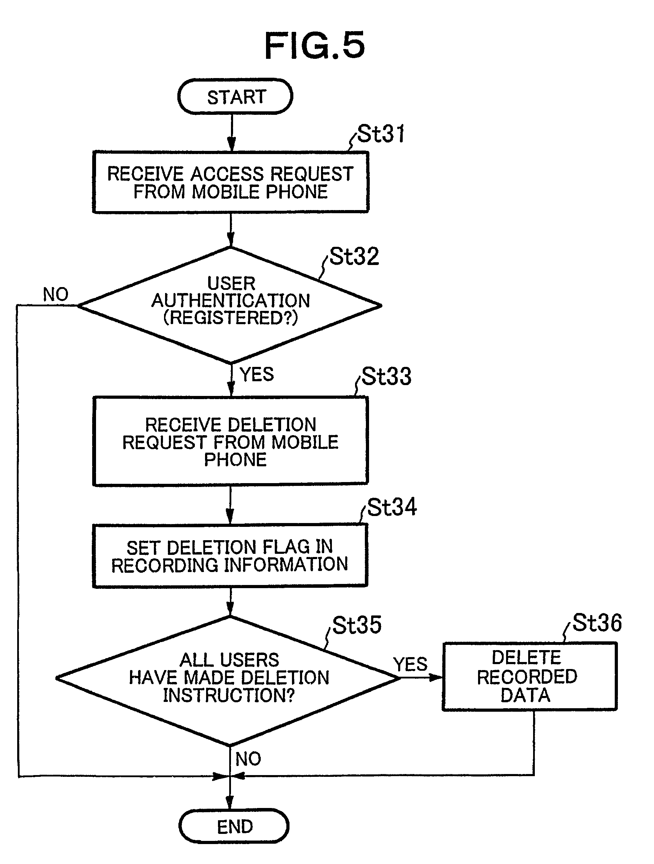

{FIG. 1} A view showing an entire configuration of a video distribution system according to an exemplary embodiment of the present invention.
{FIG. 2} A schematic block diagram showing the internal configuration of a recording server shown in FIG. 1.
{FIG. 3} A flowchart schematically showing operation of the recording server of FIG. 1 at the time of recording reservation.
{FIG. 4} A flowchart schematically showing operation of the recording server of FIG. 1 at the time of reproduction.
{FIG. 5} A flowchart schematically showing operation of the recording server of FIG. 1 at the time of deletion.

### {Description of Embodiments}

A recording and reproducing apparatus, its operating method and operating program, and a video distribution system according to an exemplary embodiment of the present invention will be described in detail below with reference to the accompanying drawings.

Referring to FIG. 1, the video distribution system according to the present exemplary embodiment is applied to the abovementioned MBMS that distributes content such as IP multicast and IP broadcast video data for mobile phones (mobile terminals). This video distributing system includes a distribution server 101 serving as a distribution apparatus for distributing video content (hereinafter, referred to as "video data") M1, a radio base station 102, a recording server 103 serving as a recording and reproducing apparatus for recording the video data M1 and distributing the recorded video data M1, and a mobile phone 104 owned by a user. The distribution server 101 and recording server 103 are installed on a network (hereinafter, referred to as "mobile phone NW") 105 and can communicate with the mobile phone 104 via the radio base station 102.

With the above configuration, in the video distribution system according to the present exemplary embodiment, the distributed video data M1 is not recorded in the mobile phone 104 itself, but recorded in the recording server 103 that can be accessed by the mobile phone and that is installed on the mobile phone NW 105. When the recorded video data M1 is to be reproduced, the recording server 103 distributes the video data M1 on demand to the mobile phone 104 by using unicast via the mobile phone NW 105, whereby the video data M1 can individually be reproduced on the mobile phone 104.

In the case of the MBMS, various devices, such as an RNC (Radio Network Controller), an SGSN (Serving GPRS (General Packet Radio Service) Support Node), an HLR (Home Location Register), a GGSN (Gateway GPRS Support Node), and a BM-SC (Broadcast Multicast Service Center) are installed on the mobile phone NW 105, in addition to the distribution server 101 shown in FIG. 1 and recording server 103. The above devices are known (refer to Non-patent Document 1) and therefore the descriptions about the configurations and operations thereof are omitted here.

The distribution server 101 uses at least one of multicast, broadcast, and unicast to distribute the video data (video content) M1 to the mobile phone 104 via the mobile phone NW 105 according to a previously set video distribution schedule. The video data M1 includes moving picture data compressed by a codec such as MPEG-4 or H. 264, music data compressed by a codec such as AAC (Advanced Audio Coding), AMR (Adaptive Multi-Rate), or MP3 (MPEG Audio Layer-3), and text information such as text telop data. The distribution server 1 O1 may have any physical configuration (including hardware/software components provided therein) as long as it can perform its intended function. For example, the distribution server 101 may be constituted by a single server or a plurality of servers. Further, the distribution server 10 may be a dedicated server machine or a general-purpose computing machine such as a PC (Personal Computer).

The radio base station 102 receives the video data M1 transmitted from the distribution server 101 via the mobile phone NW 105 and transmits the video data M1 to the mobile phone 104 by radio. Further, conversely, the radio base station 102 receives data from the mobile phone 104 by radio and transmits the data to the distribution server 101 or recording server 103 via the mobile phone NW 105.

The recording server 103 records the video data M1 distributed from the distribution server 101 and, afterward, distributes the recorded video data M1 to the mobile phone 104 via the mobile phone NW 105. Although the recording server 103 is constituted by a single server in FIG. 1, it may be constituted by a plurality of servers so as to realize a plurality of functions.

FIG. 2 shows an example of the internal configuration of the recording server 103. As shown in FIG. 2, the recording server 103 includes a communication section 10 communicably connected to the mobile phone NW 105, a controller 20, and a recording section 30.

The communication section 10 receives a message (message data), such as an access request R1, a recording reservation request R2, a reproduction request R3, and a deletion request R4, from the mobile phone 104 via the mobile phone NW 105. The communication section 10 serves also as a video reception means for receiving the video data M1 which is distributed, by using at least one of multicast, broadcast, and unicast, from the distribution server 101 to the mobile phone 104.

The recording section 30 includes a video data recording section 31 that records the video data M1 to be distributed to the mobile phone 104, a recording information recording section 32 that records recording information D1 concerning recording reservation made by a user of the mobile phone 104 for each user in association with an identifier of the user, and an authentication information recording section 33 that records authentication information D2 of the user of the mobile phone 104 for each user in association with the identifier of the user. The recording information D1 concerning recording reservation made by the user of the mobile phone 104 includes, in addition to the identifier of the user, data concerning recording reservation such as recording start time of the video data M1, recording end time thereof, and an identifier of a program to be recorded. The authentication information D2 of the user includes, as the identifier of the user, one or more of the following: user ID, mobile phone terminal ID, other identifiers, and password.

The controller 20 includes a video recording section 21, a user authentication section 22, a recording reservation section 23, a video distribution section 24, and a deletion section 25.

The video recording section 21 has a function of recording the received video data M1 in the video data recording section 31 based on the recording information D 1 of the user recorded in the recording information recording section 32. The video recording section 21 has also a function of recording all the received video data M1 in the video data recording section 31 regardless of presence/absence of the recording reservation request R2.

The user authentication section 22 performs, upon receiving the access request R1 of the user from the mobile phone 104, authentication of the user based on the authentication information D2 of the user recorded in the authentication information recording section 33.

The recording reservation section 23 records, upon receiving the recording reservation request R2 of the user from the mobile phone 104, the recording information D1 of the user included in the recording reservation request R2 in the recording information recording section 32.

The video distribution section 24 distributes, upon receiving the reproduction request R3 of the user from the mobile phone 104, the video data M1 recorded in the video data recording section 31 to the mobile phone 104 that has issued the reproduction request R3 via the communication section 10 and mobile phone NW 105.

In the present exemplary embodiment, the video distribution section 24 has the following additional functions.

1) Function of distributing the recorded video data M1 to only a mobile phone 104 that has previously issued the recording reservation request R2 for the video data M1 via the communication section 10 and mobile phone NW 105.

2) Function of transcoding the recorded video data M1 to suit the performance of one or both of the mobile phone 104 as a distribution destination and mobile phone NW 105.

3) Function of counting, for each user of the mobile phone 104, the number of times of reception of the reproduction request R3 for the video data M1 so as to restrict for each user the number of times of distribution of the recorded video data M1 to the mobile phone 104.

4) Function of recording stop position of the video data M1 in the case where the reproduction of the video data M1 is stopped halfway during distribution of the video data M1 and starting distribution of the video data M1 from the recorded stop position in the next distribution time of the video data M1.

The deletion section 25 has a function of deleting, upon receiving the deletion request R4 of the authenticated user from the mobile phone 104, the video data M1 which is the deletion target from the video data recording section 31. The deletion section 31 has also a function of deleting one or both of the recorded video data M1 and reproduced video data M1 from the video data recording section 31 after elapse of a given period of time.

The mobile phone 104 reproduces the video data M1 distributed from the distribution server 101 and issues the recording reservation request or reproduction request to the recording server 103 via the mobile phone NW 105 according to the user's predetermined operation. The mobile phone 104 may have any hardware/software configuration as long as it can perform its intended function. For example, the mobile phone 104 may be constituted by: a communication section including a radio section (transmission/reception circuit) including an antenna, a processing section (baseband processing section, application processing section, etc.) for signal processing, a controller for controlling the entire operation of the mobile phone, a recording section for recording a control program, control data, and the like, and a voice input/output unit (speaker/microphone); a display section for displaying display content (operation screen, video, etc.); and an operation section (operation key, button, switch, etc.) for the user to perform desired operations and have known functions such as a communication function, E-mail function, and browser function.

Operation of the present exemplary embodiment will be described.

First, video distribution operation of the distribution server 101 will be described.

The distribution server 101 transmits the video data M1 as IP packets by using at least one of multicast, broadcast, and unicast. The video data M1 is distributed according to a previously set distribution schedule as in the case of common TV broadcasting. The IP packets of the distributed video data M1 are transmitted to the radio base station 102 via the mobile phone NW 105 and then transmitted from the radio base station 102 to the mobile phone 104 by radio.

The mobile phone 104 receives the radio from the radio base station 102 to acquire the IP packets of the video data M1 and then decodes the video data M1 from the IP packets so as to reproduce a video. Such a video distribution system for the mobile phone 104 is described in detail in the abovementioned Non-patent Document 1 as an example of the video distribution system realized by MBMS.

Next, a processing procedure of the recording server 103 will be described.

Like the mobile phone 104, the recording server 103 receives the video data M1 which has been distributed as IP packets (multicast IP packets, broadcast IP packets, or unicast IP packets) by using at least one of multicast, broadcast, and unicast, from the distribution server 101 via the mobile phone NW 105. The recording server 103 joins a multicast group to receive the multicast packets, or receives the broadcast packets or unicast packets, to thereby acquire the video data M1 distributed to the mobile phone 104 via the mobile phone NW 105.

Recording of the video data M1 is carried out for a program specified in the recording reservation made by the user of the mobile phone 104. As the number of users of the mobile phone 104 participating in the mobile phone NW 105, a probability that most programs in the distributed video data M1 are recorded becomes higher. Therefore, in this case, the recording server 103 records all the programs that the recording server 103 itself can receive irrespective of presence/absence of the recording reservation made by the users. Also in this case, the recording reservation is necessary to record which program each of the mobile users has recorded, and each user can reproduce only a recording-reserved program.

Next, with reference to FIG. 3, operation at the time of recording reservation for the video data M1 will be described.

The user of the mobile phone 104 uses a browser function of the mobile phone 104 to access the recording server 103 via the mobile phone NW 105 and starts recording reservation operation. At this time, for user identification, the user notifies the recording server 103 of the authentication information D2 including one or more of user ID, mobile phone terminal ID, other identifiers, and password together with the access request R1.

Then, the recording server 103 receives, at the communication section 10, the access request R1 transmitted from the mobile phone 104 via the mobile phone NW 105 (step St11) and uses the user authentication section 22 to collate the authentication information D2 of the user who has made the access request R1 and authentication information D2 of the user registered in the authentication information storage section 33, thereby performing authentication of the user (step St12). When the authentication information D2 of the user who has made the access request R1 and authentication information D2 of the user registered in the authentication information storage section 33 do not coincide with each other and therefore it is determined that the user has no authority to make recording reservation (NO in step St12), the recording server 103 denies the access request R1 of the user to thereby deny the recording reservation (step St14).

On the other hand, when the user authentication has been successfully completed (YES in step St12), the recording server 103 receives, at the communication section 10, the recording reservation request R2 for the video data M1 and recording information D1 required for the recording, which are subsequently transmitted from the mobile phone 104 via the mobile phone NW 105 (step St13). The recording information D1 includes recording start time of the video data M1, recording end time thereof, and an identifier of a program to be recorded. Other information may be added to the recording information D1.

The recording server 103 then stores the recording information D1 notified from the mobile phone 104 of the user in the recording information recording section 32 in association with the identifier of the user.

Next, operation at the time of recording of the video data M1 will be described.

The recording server 103 uses the video recording section 21 to always check the recording start time of the recording reservation stored in the recording information recording section 32. When the recording start time has arrived, the recording server 103 starts recording of a program of the video data M1 while storing it in the video data recording section 31. The recording server 103 may record all the programs with the check of the record start time omitted. In the case where a plurality of users have made recording reservation for the same program, the recording server 103 does not create copies corresponding to the number of recording reservations, but stores only one copy of the received video data M1 in the video data recording section 31.

Next, with reference to FIG. 4, operation at the time of reproduction of the video data M1 will be described.

The user of the mobile phone 104 uses a browser function of the mobile phone 104 to access the recording server 103 via the mobile phone NW 105. At this time, for user identification, the user notifies the recording server 103 of the authentication information D2 including one or more of user ID, mobile phone terminal ID, other identifiers, and password together with the access request R1.

Then, the recording server 103 receives, at the communication section 10, the access request R1 transmitted from the mobile phone 104 via the mobile phone NW 105 (step St21) and uses the user authentication section 22 to collate the authentication information D2 of the user who has made the access request R1 and authentication information D2 of the user registered in the authentication information storage section 33, thereby performing authentication of the user (step St22). When the authentication information D2 of the user who has made the access request R1 is not registered in the authentication information storage section 33 (NO in step St22), the recording server 103 denies the access request R1 of the user to thereby deny the reproduction (step St23).

On the other hand, when the user authentication has been successfully completed (YES in step St22), the recording server 103 receives, at the communication section 10, the reproduction request R3 for the video data M1 and reproduction information required for the reproduction, which are subsequently transmitted from the mobile phone 104 via the mobile phone NW 105 (step St24). The reproduction information includes an identifier of the user, identifier of the recorded video data M1 to be reproduced, reproduction start point (reproduction start position), and the like. Other information may be added to the reproduction information.

The recording server 103 then uses the video distribution section 24 to check whether the reproduction request R3 satisfies previously set reproduction conditions of the recorded video data M1 (step St25).

A first reproduction condition is that recording reservation has previously been made for a program of the video data M1. The recording server 103 uses the video distribution section 24 to refer to the reproduction information of the authenticated user and recording information D1 stored in the recording information recording section 32 to determine whether video data M1 having the same identifier as that of the video data M1 included in the reproduction information is registered in the recording information D1 of a user having the same identifier as that of the user included in the reproduction information, thereby checking whether the recording reservation for the video data M 1 has been made or not.

A second reproduction condition is that recording of the video data M1 has actually been executed, and that the recorded video data M1 has not been deleted. In this case, it is only necessary that the recording of the program of the video data M1 should have been started, i.e., it is not necessary that the recording of the video data M1 should have been completed. That is, even if the program of the video data M1 is being recorded, the second reproduction condition is satisfied as long as follow-up reproduction is possible. In the case where a deletion flag to be described later has been added to data concerning the recording reservation included in the recording information D2 of the user stored in the recording information recording section 32, the recording server 103 uses the video distribution section 24 to determine that the user has deleted the recorded data and denies the reproduction. Further, in the case where the recorded video data M1 is not stored in the video data recording section 31, the reproduction server 103 denies the reproduction.

As a third reproduction condition, in the processing of step St25, the recording server 103 may check whether the number of times of reproduction of the recorded data is within a prescribed value. In this case, the recording server 103 counts, for each user, the number of times of reception of the reproduction request R3 and denies the reproduction in the case where the number of the reproduction requites R3 issued from a single user exceeds the prescribed value. With this configuration, a recording method in which a restriction is out on the number of times of reproduction is realized.

When the above reproduction conditions are satisfied (YES in step St25), the recording server 103 uses the video distribution section 24 to start distribution of the video data M1 for which the reproduction request R3 has been made to the mobile phone 104 by using IP unicast via the communication section 10 and mobile phone NW 105 (step St26). The video data M1 is transmitted to the radio base station 102 and then transmitted by radio to the mobile phone 104. The mobile phone 104 receives the radio to thereby reproduce a video. When the video reproduction by the mobile phone 104 has been completed (YES in step St27), the recording server 103 ends the distribution of the video data M1 (step St28).

Another function in the reproduction operation will be described.

As a first function, a configuration may be adopted in which when a user temporarily stops the reproduction of the video data M1 in the middle thereof, he or she can go on viewing the video data M1 anew from the stop point at the subsequent connection time. When temporarily stopping the reproduction, the user performs operation of, e.g., depressing a pause button on the mobile phone 104 during reproduction of the video to notify the recording server 103 of a reproduction temporary stop request. Upon receiving the request, the recording server 103 records the notified reproduction stop position in the recording information recording section 32 and then stops distribution of the video data M1. Afterward, when the subsequent reproduction request R3 for the video data M1 has been made from the mobile phone 104, the recording server 103 checks whether the reproduction stop position of the video data M1 is recorded in the recording information recording section 32 and, when recorded, starts distribution of the video data M1 from the recorded reproduction stop position.

As a second function, when transmitting the recorded video data M1 to the mobile phone 104, the recording server 103 may transcode the motion picture of the recorded video data M1, according to a request from the mobile phone 104, so as to change setting values of control parameters such as resolution or bit-rate. For example, in the case where the network state of the mobile phone NW 105 is changed, or where network performance is changed at the handover time of the mobile phone 104, the transcode parameters can be modified.

Next, with reference to FIG. 5, operation at the time of deletion of the recorded data will be described.

The user of the mobile phone 104 uses a browser function of the mobile phone 104 to access the recording server 103 via the mobile phone NW 105 and starts deletion processing. At this time, for user identification, the user notifies the recording server 103 of the authentication information D2 including one or more of user ID, mobile phone terminal ID, other identifiers, and password together with the access request R1.

Then, the recording server 103 receives, at the communication section 10, the access request R1 transmitted from the mobile phone 104 via the mobile phone NW 105 (step St31) and uses the user authentication section 22 to collate the authentication information D2 of the user who has made the access request R1 and authentication information D2 of the user registered in the authentication information storage section 33, thereby performing authentication of the user (step St32). When the authentication information D2 of the user who has made the access request R1 is not registered in the authentication information storage section 33 (NO in step St32), the recording server 103 denies the access request R1 of the user and ends this flow.

On the other hand, when the user authentication has been successfully completed (YES in step St32), the recording server 103 receives, at the communication section 10, the deletion request R4 for the video data M1 and deletion information required for the deletion, which are subsequently transmitted from the mobile phone 104 via the mobile phone NW 105 (step St33). The deletion information includes an identifier of the user and identifier of a program of the recording-reserved video data M1.

The recording server 103 then uses the deletion section 25 to set a control flag (hereinafter, referred to as "deletion flag") indicating "deleted" to data concerning the recording reservation included in the recording information D1 of the authenticated user which is stored in the recording information recording section D32 (step St34). The setting of the deletion flag is made by setting a flag value of 0 (meaning absence of deletion flag) or 1 (presence of deletion flag).

Then, the recording server 103 uses the deletion section 25 to refer to the recording information D1 of the user recorded in the recording information recording section 32 to check whether the deletion flags have been set to data concerning the recording reservation included in the recording information D1 of all the users who have made recording reservation for a specified program of the video data M1 (step St35). When it is confirmed that the deletion flags have been set to the data concerning the recording reservation in the recording information D1 of all the users (YES in St35), the recording server 103 determines that all the users have made a deletion instruction and uses the deletion section 25 to delete the corresponding video data M1 from the recorded data stored in the video data recording section 31 (step St36).

Further, as additional processing, for the purpose of reducing the size of data to be stored, the recording server 103 automatically deletes the recorded video data M1 after a predetermined time period has elapsed after the recording of the video data M1, or deletes only a reproduced video data M1 after a predetermined time period has elapsed after the reproduction of the video data M1. For example, the recording server 103 periodically checks the date of the video data M1 stored in the video data recording section 31 and, when the date is earlier than a predetermined date, deletes the relevant video data M1.

As described above, in the present exemplary embodiment, the video data M1 distributed from the distribution server 101 is not recorded in the mobile phone 104, but recorded in the recording server 103 that can be accessed by the mobile phone 104 and that is installed on the mobile phone NW 105. When the recorded video data is to be reproduced, the recording server 103 distributes the video data M1 on demand to the mobile phone 104 by using unicast.

Thus, according to the present exemplary embodiment, it is possible to record the video data M1 which is distributed, by using multicast, broadcast, or unicast, from the distribution server 101 to the mobile phone 104 in the recording server 103 on the mobile phone NW 105 irrespective of the performance of the mobile phone 104 and to allow a user to view the recorded video data M1 in a time-shift manner. That is, in the present exemplary embodiment, it is possible to stably record IP multicast or IP broadcast video content distributed for the mobile phone 104 without worrying about the storage capacity of a recording device of the mobile phone 104, radio wave environment, or remaining battery level and allow a user to view the recorded video data in a time-shift manner.

The recording server (recording and reproducing apparatus) of the video distribution system for mobile phones according to the above exemplary embodiment may have any physical configuration (including hardware/software components provided therein) as long as it can perform the respective processing (functions) of the above components (communication section 10, controller 20, and recording section 30). For example, a configuration in which each component constitutes a individual circuit (or unit) or a program part such as a program module, or a configuration in which all the components are integrated in a single circuit (or unit) may be adopted. The abovementioned configurations may appropriately be selected, modified, and deformed depending on a restriction such as the function or use purpose of an apparatus to be actually used. Further, an operating method of the apparatus that executes the same processing as those of the respective functions corresponding to the above components is also included in the category of the present invention.

Further, at least a part of a function of each section may be realized by software processing performed by a computer constituted by a microprocessor having a CPU. In this case, a program for allowing the computer to function is included in the category of the present invention. The program includes, not only a program that can directly be executed by the CPU, but also various types of programs such as a source code program, a compressed program, and encrypted program. The program may be of any type such as an application program that operates in cooperation with a control program for controlling the entire operation of the apparatus, such as an OS (Operating System) or firmware or that is integrated in a part of the control program to operate integrally therewith or a software part (software module) that constitutes the application program. Further, the program may be downloaded from an external node such as a server or the like on a network to be installed in a recording medium of the apparatus. The abovementioned configurations may appropriately be selected, modified, and deformed depending on a factor such as the function or use purpose of an apparatus to be actually used.

Further, a computer-readable recording medium that stores the above program is included in the category of the present invention. In this case, the recording medium may be of any type such as a fixed type which is fixed in the apparatus or portable type which a user can carry.

Although a mobile phone is used as a terminal device in the above embodiment, the present invention is not limited to this, but other terminal devices such as a PDA may be used.

While the invention has been particularly shown and described with reference to the exemplary embodiments thereof, the invention is not limited to these exemplary embodiments. It will be understood by those of ordinary skill in the art that various changes in form and details may be made therein without departing from the spirit and scope of the present invention as defined by the claims.

This present application is based upon and claims the benefit of priority from Japanese patent application No. 2008-107870, filed on April 17, 2008, the disclosure of which is incorporated herein in its entirety by reference.

### {Industrial Applicability}

The present invention can be applied to a video distribution system, typified by an MBMS, that distributes a video to a terminal device such as a mobile phone by using multicast, broadcast, or unicast. In particular, the present invention can be applied to a recording and reproducing apparatus that records a distributed video and distributes the recorded video data to a terminal device such as a mobile phone and its operating method and its operating program.

### {Reference Signs List}

10: Communication section
20: Controller
21: Video recording section
22: User authentication section
23: Recording reservation section
24: Video distribution section
25: Deletion section
30: Recording section
31: video data recording section
32: Recording information recording section
33: Authentication information recording section
101: Distribution server
102: Radio base station
103: Recording server (recording and reproducing apparatus)
104: Mobile phone (mobile terminal)
105: Mobile phone NW (mobile phone NW)

## Claims

1. A recording and reproducing apparatus installed on a network through which communication with a terminal device is enabled, comprising:
a recording reservation section that receives a recording reservation request for video data from the terminal device via the network;
a communication section that receives the video data which is distributed to the terminal device by using at least one of multicast, broadcast, and unicast;
a video recording section that records the received video data based on the recording reservation request; and
a video distribution section that distributes the recorded video data to a terminal device that has made a reproduction request for the relevant video data via the network.

2. The recording and reproducing apparatus according to claim 1, wherein the video recording section records all the received video data irrespective of presence/absence of the recording reservation request for the video data, and
the video distribution section distributes the recorded video data to a terminal device that has previously made the recording reservation request for the relevant video data.

3. The recording and reproducing apparatus according to claim 1 or 2, wherein
the video distribution section transcodes the recorded video data to suit the performance of one or both of the terminal device as a distribution destination and network.

4. The recording and reproducing apparatus according to claim 1 or 2, further comprising
a deletion section that receives a deletion request for the recorded video data from the terminal device and deletes the relevant video data.

5. The recording and reproducing apparatus according to claim 1 or 2, wherein
the video distribution section counts, for each user of the terminal device, the number of times of reception of the reproduction request for the video data so as to restrict for each user the number of times of distribution of the recorded video data to the terminal device.

6. The recording and reproducing apparatus according to claim 1 or 2, further comprising
a deletion section that deletes one or both of the recorded video data and reproduced video data after elapse of a given period of time.

7. The recording and reproducing apparatus according to claim 1 or 2, wherein
the video distribution section records stop position of the video data in the case where the reproduction of the video data is stopped halfway during distribution of the video data and starts distribution of the video data from the recorded stop position in the next distribution time of the video data.

8. An operating method of a recording and reproducing apparatus installed on a network through which communication with a terminal device is enabled, comprising:
receiving a recording reservation request for video data from the terminal device via the network;
receiving the video data which is distributed to the terminal device by using at least one of multicast, broadcast, and unicast;
recording the received video data based on the recording reservation request; and
distributing the recorded video data to a terminal device that has made a reproduction request for the relevant video data via the network.

9. The operating method according to claim 8, wherein
at the time of recording of the video data, all the received video data are recorded irrespective of presence/absence of the recording reservation request for the video data, and
the recorded video data is distributed to a terminal device that has previously made the recording reservation request for the relevant video data.

10. The operating method according to claim 8 or 9, wherein
in the case where a deletion request for the recorded video data is received from the terminal device, the relevant video data is deleted.

11. An operating program of a recording and reproducing apparatus installed on a network through which communication with a terminal device is enabled, allowing a computer to execute the steps of:
receiving a recording reservation request for video data from the terminal device via the network;
receiving the video data which is distributed to the terminal device by using at least one of multicast, broadcast, and unicast from the network;
recording the received video data based on the recording reservation request; and
distributing the recorded video data to a terminal device that has made a reproduction request for the relevant video data via the network.

12. The operating program according to claim 11, wherein
the step of recording the video data records all the received video data irrespective of presence/absence of the recording reservation request for the video data, and
the step of distributing the video data distributes the recorded video data to a terminal device that has previously made the recording reservation request for the relevant video data.

13. The operating program according to claim 11 or 12, further comprising a step of receiving a deletion request for the recorded video data from the terminal device and deletes the relevant video data.

14. A video distribution system comprising:
the recording and reproducing apparatus as claimed in any one of claims 1 to 7, and
a distribution apparatus that distributes the video data to the terminal device via the network.

15. The video distribution system according to claim 14, wherein
the terminal device is a mobile phone.
